# EUROPEAN PATENT APPLICATION

(11) **EP 1 701 457 A1**
(43) Date of publication of application: **13.09.2006**
(21) Application number: 04807512.1
(22) Date of filing: 15.12.2004
(51) Int. Cl.: H04B 7/26, H04Q 7/38

(54) **TERMINAL MANAGEMENT METHOD, TERMINAL MANAGEMENT APPARATUS AND MOBILE COMMUNICATION TERMINAL**

(30) Priority: 17.12.2003 JP 2003420189
(71) Applicant: NTT DoCoMo, Inc., Tokyo 100-6150 (JP)
(72) Inventor: WASHIO, Satoshi, IP Dept., NTT DoCoMo Inc., Tokyo 1006150 (JP); KAWABATA, Hiroshi, IP Dept., NTT DoCoMo Inc., Tokyo 1006150 (JP); YAMAGUCHI, Tomoo, IP Dept., NTT DoCoMo Inc., Tokyo 1006150 (JP)
(74) Representative: HOFFMANN EITLE
(86) International application number: PCT/JP2004/019155
(87) International publication number: WO 2005/060128

(57) **Abstract**

Data indicating information relating to a mobile communication terminal is sent from the mobile communication terminal at a designated opportunity and the status of the mobile communication terminal is managed by a server apparatus. An AP managing server 500 sends to a mobile telephone device 600 an identifier indicating a timing for sending information relating to an application program to the AP managing server 500. When the identifier indicating the timing for sending information relating to an application program to the AP managing server 500 is received, the mobile telephone device 600 sends the information relating to the application program to the AP managing server 500 on the basis of the timing indicated by the received identifier.

## Description

### Technical field

The present invention relates to a method for managing the status of mobile communications terminals with a server apparatus.

### Background art

In recent years, application programs capable of being used by mobile telephone devices have been distributed over mobile packet communication networks by WWW (World Wide Web) servers connected to the Internet.

However, some application programs downloaded to the mobile telephone devices are left unused because they differ from the likes of the user of the mobile telephone device, despite having been downloaded. Companies offering application programs desire information indicating how mobile telephone devices and distributed application programs are being used, in order to eliminating these types of program and offer better programs for users of mobile telephone devices.

Japanese Laid-Open Patent Application 10-154077, for example, discloses technology for allowing server apparatuses to acquire information possessed by terminals. By applying the technology disclosed in this patent document, companies offering application programs can acquire and manage information relating to statuses of mobile telephone devices and distributed application programs.

However, due to the tremendous number of mobile telephone devices, it would take an extremely long time for the server apparatus to sequentially acquire the information possessed by mobile telephone devices itself.

While methods for having the mobile telephone devices themselves send the information possessed by the mobile telephone devices are possible, the timing of the mobile telephone device sending the data must be considered if significantly affecting the communication network traffic is to be avoided due to a large amount of data flowing through the communication lines.

The present invention was arrived at in light of the foregoing issues, and it is an object thereof to provide a terminal managing method, a terminal managing apparatus, and a mobile communication terminal wherein the mobile communication terminal can change the timing for sending information relating to the mobile communication terminal and application programs.

### Disclosure of Invention

To address the foregoing problems, a terminal managing method is provided including: an opportunity data set sending step of sending, from a managing server apparatus having a storage device, an opportunity data set indicating an opportunity to send data to a mobile communication terminal having a storage device via a communication network; an opportunity data set receiving step of receiving, at the mobile communication terminal, the opportunity data set sent in the opportunity data set sending step; an information data set sending step of sending, from the mobile communication terminal, an information data set indicating information relating to the mobile communication terminal to the managing server apparatus via the communication network at the opportunity indicated by the opportunity data set; and an information data set storing step of receiving, at the managing server apparatus, the information data set sent in the information data set sending step and storing the received information data set in the storage device.

Further, the present invention provides a terminal managing apparatus including: opportunity data set sending means for sending an opportunity data set indicating an opportunity for sending data to a mobile communication terminal having a storage device via a communication network; and information data storing means for receiving an information data set indicating information relating to the mobile communication terminal sent from the mobile communication terminal via the communication network and storing the received information data set in the storage device.

Further, the present invention provides a mobile communication terminal including: opportunity data receiving means for receiving an opportunity data set sent via a communication network from a server apparatus sending opportunity data indicating an opportunity to send data; and information data set sending means for sending an information data set indicating information relating to the terminal to the server apparatus via the communication network at the opportunity indicated by the opportunity data set received by the opportunity data receiving means.

With the present invention, a mobile communication terminal can change an opportunity for when to send data to a server managing the mobile communication terminal, thereby making it possible to cause data to be sent from the mobile communication terminal at an arbitrary opportunity.

### Brief Description of Drawings

Fig. 1 is a block diagram showing an overall configuration of a status managing system according to an embodiment of the present invention.
Fig. 2 is a view illustrating a WWW browser screen displayed to a mobile telephone device 600 of the system.
Fig. 3 is a view illustrating a format of data stored in a storage device 101 of a content server 100 of the system.
Fig. 4 is a view illustrating a format of data stored in a storage device 501 of an AP managing server 500 of the system.
Fig. 5 is a view illustrating a hardware configuration of the mobile telephone device 600 of the system.
Fig. 6 is a view illustrating a format of data stored in a storage device 607 of the mobile telephone device 600 of the system.
Fig. 7 is a sequence diagram illustrating a download operation of the system.
Fig. 8 is a sequence diagram illustrating an operation of the mobile telephone device 600 of the system sending, to the AP managing server 500, the information relating to application programs at an opportunity of position registration.
Fig. 9 is a sequence diagram illustrating an operation of the mobile telephone device 600 of the system sending, to the AP managing server 500, information relating to application programs upon an instruction from the AP managing server 500.

### Best Mode for Carrying Out the Invention

Below follows a description of an embodiment according to the present invention, with reference to the drawings. Note that the present invention is not limited to this embodiment, and includes all aspects within the scope described by the claims.

### 1. Embodiment

### 1-1. Configuration of the Embodiment

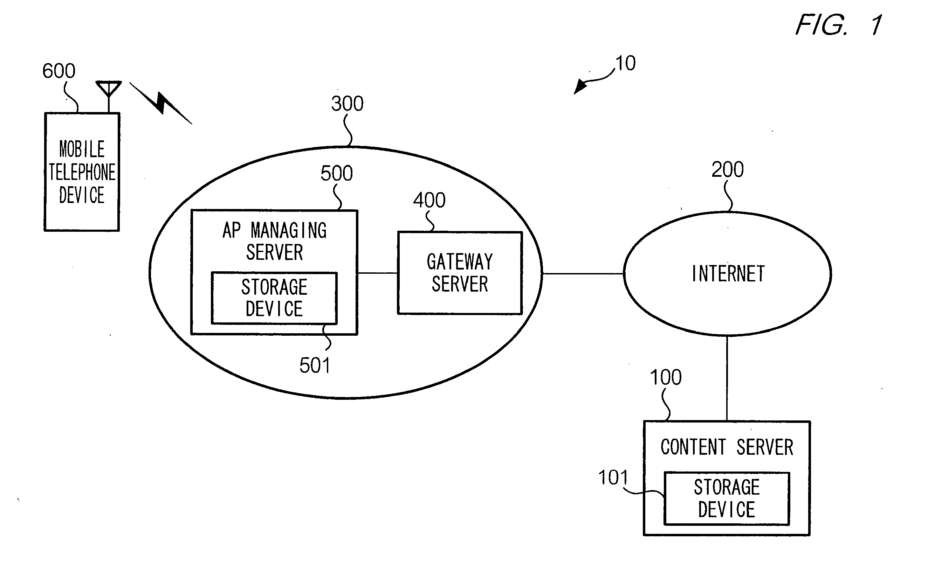

Fig. 1 is a block diagram illustrating an overall configuration of a status managing system 10 according to an embodiment of the present invention. In the status managing system 10, many mobile telephone devices and content servers exist, but to prevent the drawings from becoming too complicated, only a prescribed mobile telephone device 600 and a content server 100, whose server name is "www.abc.co.jp" are shown.

The content server 100 is a server operated by a company providing application programs to client apparatuses, and has the same hardware and functionality as a common WWW server. The content server 100 is connected to an Internet 200, and performs packet communication via the Internet 200 with the client apparatuses.

A mobile packet communication network 300 is a communication network for providing mobile data communication service, and is provided with a wireless base station for performing wireless communication with mobile telephone devices included in the mobile packet communication network 300, a switchboard connected to the wireless base station, a gateway switchboard connected to the switchboard (none of which are shown in the drawings), a gateway server 400 connected to the gateway switchboard, and an AP managing server 500 connected to the gateway server 400. The mobile packet communication network 300 uses the wireless base station, the switchboard, the gateway switchboard, and the gateway server 400, located inside the network, to relay packet communication performed between the WWW serves connected to the Internet 200 and the mobile telephone devices included in the mobile packet communication network 300.

The gateway server 400 is connected to the Internet 200 and has functionality for performing interconversion of communication protocols used in the mobile packet communication network 300 and communication protocols used by the Internet 200. Specifically, the gateway server 400 performs interconversion between the communication protocols used in the mobile packet communication network 300 and the TCP/IP (Transmission Control Protocol/Internet Protocol) used as a standard on the Internet 200, and relays transmission of data between the mobile packet communication network 300 and the Internet 200.

The AP managing server 500 is connected to the gateway server 400 and has the same hardware configuration and functionality as common WWW servers. The AP managing server 500 is provided with functionality for performing packet transmission, and performs transmission of data by performing packet communication between the content server 100 and the mobile telephone devices included in the mobile packet communication network 300.

The mobile telephone device 600 is a foldable mobile telephone device possessed by a user, not shown in the drawings, and can receive mobile data communication service provided by the mobile packet communication network 300.

### 1-1-1. Configuration of the Content Server

The content server 100 has a storage device 101 provided with a non-volatile memory such as, for example, a hard disk. The storage device 101 stores an application program "ticket.exe" provided by a company operating the content server 100 and "download.html" and "index.html", which are text files written according the CHTML (Compact Hyper Text Markup Language) markup language. The URL (Uniform Resource Locator) indicating the stored position of "index.html" is "http://www.abc.co.jp/index.html" and the URL indicating the stored position of "download.html" is "http://www.abc.co.jp/download.html".

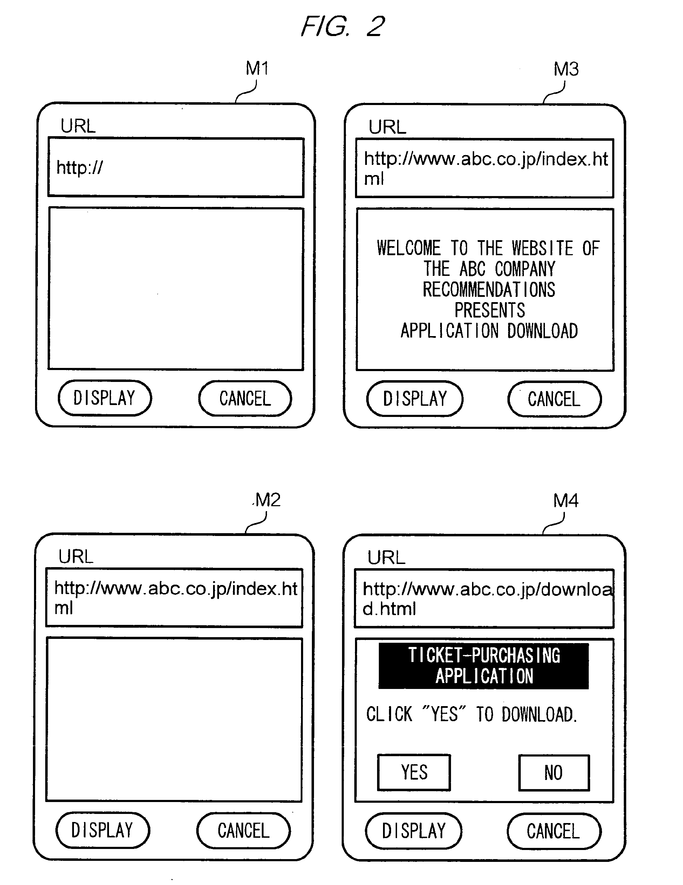

"index.html" is written such that, when it is interpreted by a WWW browser capable of interpreting CHTML, options for selecting pages associated with the page indicated by "index.html" are displayed to the WWW browser screen, as shown by browser screen M3 in Fig. 2. Written in "index.html" are URLs indicating stored positions of files for displaying pages corresponding to and associated with the options for selecting pages associated with "index.html".

"download.html" is written such that, when it is interpreted by a WWW browser capable of interpreting CHTML, a page for downloading the application program "ticket.exe" provided by the content server 100 is displayed to the WWW browser screen, as shown by browser screen M4 in Fig. 2. Written in "download.html" is the URL indicating the stored position of the application program "ticket.exe."

When the content server 100 receives from a client apparatus a page requesting message (including as a parameter a URL of the file to display the page) requesting a file for displaying a page, the content server 100 reads the file specified by the URL from the storage device 101. In response to the page requesting message, after reading the file from the storage device 101, the content server 100 generates a page sending message containing the read file and sends the generated message to the client apparatus which sent the page requesting message.

When the content server 100 receives an application requesting message (including as a parameter the URL of the application program) requesting download of an application program from a client apparatus, the content server 100 reads the application program specified by the URL from the storage device 101. After reading the application program from the storage device 101, the content server 100 generates an application sending message containing data indicating the server name of the content server 100, the read application program, data indicating the file name of the application program, and data indicating the destination of the application requesting message, and sends the generated message to the AP managing server 500.

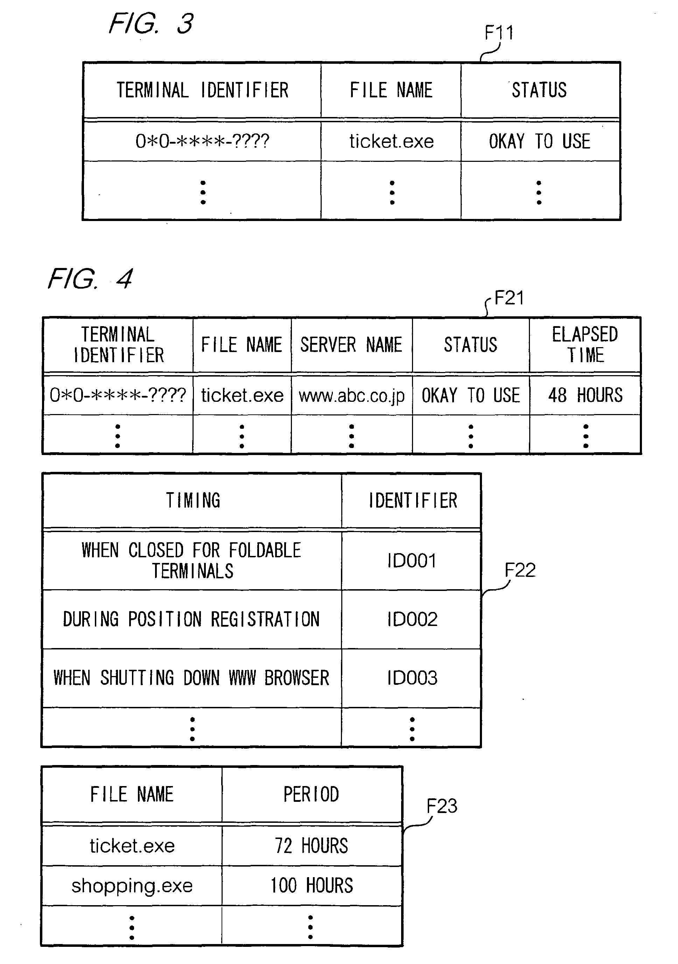

After sending the application sending message to the AP managing server 500, the content server 100 associates the data indicating the file name of the application program with the data indicating the destination of the application program as distribution destination data indicating the distribution destination of the application program, and stores this in the storage device 101 in the format shown in Fig. 3.

Furthermore, when the content server 100 receives a status sending message containing information relating to the application program, the content server 100 searches for the distribution destination data stored in the storage device 101, using as a key a terminal identifier for identifying the client apparatus which sent the message and the data indicating the file name of the application program, included in the message. When the content server 100 finds the corresponding data, the content server 100 associates data indicating the use status of the application program, contained in the status sending message, with the corresponding data, and stores this in the format shown in Fig. 3.

### 1-1-2. Configuration of the AP Managing Server

The AP managing server 500 has a non-volatile memory such as, for example, a hard disk. In the storage device 501 the AP managing server 500 stores status data indicating the status of the mobile telephone devices contained in the mobile packet communication network 300, a timing data table, data indicating a period during which application programs provided by the content server 100 can be stored in the mobile telephone devices without being used, and so on.

The status data associates and stores the terminal identifier for identifying the mobile telephone device, data indicating the file name of the application program downloaded to the mobile telephone device, data indicating the server name of the server which originally provided the application program, data indicating the time elapsed since the application program downloaded to the mobile telephone device was last used, and data indicating the use status of the application program downloaded to the mobile telephone device, in the format F21 shown in Fig. 4. The timing at which the mobile telephone devices contained in the mobile packet communication network send data indicating the status of mobile telephone devices and application programs to the AP managing server 500 and the identifiers for identifying the timings (hereafter, "timing identifiers") are associated and stored in the timing data table in the format F22 shown in Fig. 4.

Data indicating the file names of the application programs and the data indicating the period are associated and stored in the data indicating the period during which application programs provided by the content server 100 can be stored in the mobile telephone devices without being used, in the format F23 shown in Fig. 4.

The AP managing server 500 is provided with, for example, functionality for managing the status of mobile telephone devices contained in the mobile packet communication network 300, the status of application programs downloaded by the mobile telephone device from the content server 100, and so on, aside from functionality which common WWW servers have. Below follows a description of the functionality of the AP managing server 500.

### - Application Program Status Managing Functionality -

When the AP managing server 500 receives the application sending message sent from the content server 100, it associates and stores in the storage device 501 the data indicating the server name of the content server 100, the data indicating the file name of the application program, and the data indicating the destination of the application program, which are contained in the message, in the format F21 shown in Fig. 4. The AP managing server 500 sends the received application sending message to the mobile telephone device specified in the data indicating the destination of the program contained in the message.

After the AP managing server 500 sends the application sending message to the mobile telephone device which is the destination for the message, it waits for a status sending message containing information relating to the application program to be sent from the mobile telephone device which received the application program. This status sending message contains the terminal identifier for identifying the mobile telephone device which sent the sending message, data indicating the file name of the application program downloaded to the mobile telephone device, and data indicating the time elapsed since the application program was last used.

When a status sending message is received, the AP managing server 500 searches for status data stored in the storage device 501 using as a key the terminal identifier and the data indicating the file name of the application program, which are contained in the received message. When the AP managing server 500 finds the corresponding status data, it associates, to the corresponding status data and stores, the data indicating the time elapsed since the application program was last used, which is contained in the received message.

Next, the AP managing server 500 performs a search in the storage device 501 for data indicating the period during which the application program can be stored in the mobile telephone device without being used, using as a key the file name of the application program contained in the received message. The AP managing server 500 reads, from the storage device 501, the data indicating the period during which the application program can be stored in the mobile telephone device without being used, compares the read data with the data indicating the time elapsed since the application program was last used contained in the received message, and judges whether or not to stop use of the application program stored in the mobile telephone device which sent the status sending message.

If the AP managing server 500 judges that the time elapsed since the application program was downloaded to the mobile telephone device and used last exceeds the period during which the application program can be stored in the mobile telephone device without being used, the AP managing server 500 searches for the status data stored in the storage device 501 using as a key the terminal identifier and the data indicating the file name of the application program contained in the status sending message. When the corresponding status data is found, the AP managing server 500 changes the data indicating the use status of the application program registered in association with the terminal identifier and the data indicating the file name of the application program to "stop use."

Next, the AP managing server 500 generates an application stopping message for stopping use of the application program stored in the mobile telephone device identified by the terminal identifier. The application stopping message contains the file name of the application program and the terminal identifier of the mobile telephone device in which use of the application program is to be stopped.

The generated application stopping message is sent to the mobile telephone device identified by the terminal identifier. The AP managing server 500 reads the server name of the server which originally provided the application program stored in association with the terminal identifier and the file name of the application program. The AP managing server 500 sends the application stopping message to the server specified by the read server name.

### Function for Instructing the Timing for Sending a Status -

The AP managing server 500 is provided with functionality for instructing the sending timing of the status sending message to the mobile telephone devices contained in the mobile packet communication network 300. This functionality is described below.

When a user of the AP managing server 500 performs an operation for selecting from the timing data table stored in the storage device 501 a timing for sending information relating to mobile telephone devices or application programs to the AP managing server 500, a timing identifier for identifying the selected timing is read from the storage device 501. The AP managing server 500 sends the read timing identifier to the mobile telephone device contained in the mobile packet communication network 300.

### - Reporting Function to Content Server -

The AP managing server 500 is provided with functionality for sending information relating to the status of mobile telephone devices contained in the mobile packet communication network 300 and application programs to the server originally providing the application program.

When the AP managing server 500 receives the status sending message containing information relating to the application program which is sent from a mobile telephone device contained in the mobile packet communication network 300, the AP managing server 500 performs a search for status data stored in the storage device 501 using as a key the terminal identifier and data indicating the file name of the application contained in the message. When the corresponding data is found, the AP managing server 500 reads the server name of the server which originally provided the application program stored in association with the corresponding data. The AP managing server 500 adds the data indicating the use status of the application program to the received status sending message and sends the status sending message with the server designated by the server name read from the storage device 501 as the destination address.

### 1-1-3. Configuration of the Mobile Telephone Device

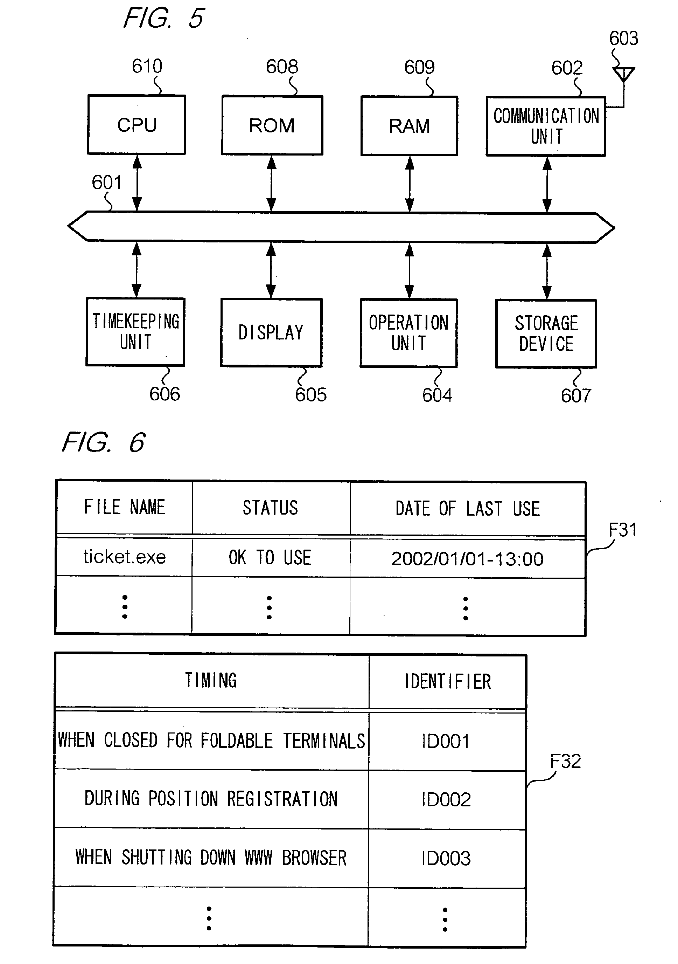

Fig. 5 is a block diagram illustrating a hardware configuration of the mobile telephone device 600 shown in Fig. 1. As shown in Fig. 5, the various portions of the mobile telephone device 600 except for an antenna 603 are connected via a bus 601.

A communication unit 602 is provided with the antenna 603, and performs wireless communication with wireless base stations located within the mobile packet communication network 300, under control of a CPU (Central Processing Unit) 610.

An Operation unit 604 is provided with, for example, a number pad a plurality of keys for entering operation instructions, not shown in the drawings. When a user of the mobile telephone device 600 operates the Operation unit 604, a signal indicating the content of the operation in accordance with the operation is output to the CPU 610.

A Display 605 is provided with, for example, a liquid crystal display panel and a control circuit for controlling display of the liquid crystal display panel, not shown in the drawings. The Display 605 displays, to the liquid crystal display, character and graphics screens, menu screens for operating the mobile telephone device 600, and more, under control of the CPU 610.

A Timekeeping unit 606 keeps the current time, including the date, and supplies data indicating the current time to the CPU 610.

A storage device 607 is provided with a non-volatile memory such as an EEPROM (Electrically Erasable and Programmable Read Only Memory), not shown in the drawings. The storage device 607 uses data for controlling the mobile telephone device 600 or the WWW browser to store application programs, timing identifiers, timing data tables, and so on for the mobile telephone device 600 downloaded from the content server 100.

The format F31 shown in Fig. 6 is a view showing a format for data relating to application programs stored in the storage device 607. As shown in Fig. 6, data indicating file names of application programs, data indicating the use status of application programs, and data indicating the date when these application programs were last used by the mobile telephone device 600 are associated and stored in the storage device 607.

The format F32 shown in Fig. 6 is a view showing the timing at which the mobile telephone device 600 sends data indicating the status of the mobile telephone device 600 or application programs to the AP managing server 500, as well as a timing data table indicating the correspondence relationship with timing identifiers. As shown in Fig. 6, the timing for sending data indicating the status of the mobile telephone device 600 and the application programs, and the timing identifiers are associated and stored in the storage device 607.

A program for initializing the mobile telephone device 600, a control program for controlling the mobile telephone device 600, a WWW browser program, and more, are stored in a ROM (Read Only Memory) 608. A RAM (Random Access Memory) 609 is used as a work area for the CPU 601 and temporarily store data used by programs executed by the CPU 610.

When the power is turned on to the mobile telephone device 600, the CPU 610 reads the initializing program from the ROM 608, initializes the CPU 610 itself, and then initializes the various portions of the mobile telephone device 600. The CPU 610 reads the control program from the ROM 608 after initialization is finished, and executes it. When the CPU 610 receives a signal indicating the content of an operation by a user from the Operation unit 604, the CPU 610 interprets the content of the user instruction based on the signal indicating the content of the user operation and the screen displayed to the Display, and performs a process in accordance with the content of the operation.

After executing the control program, the CPU 610 reads the WWW browser program from the ROM 608 and executes it upon an operation by the user with the Operation unit 604 to launch the WWW browser. The WWW browser executed in the mobile telephone device 600 is provided with functionality for performing communication with a server provided with common WWW server functionality.

When the user of the mobile telephone device 600 performs, in the Operation unit 604, an operation to enter a URL (Uniform Resource Locator) for viewing pages provided by the WWW server connected to the Internet 200 and an operation for displaying the page specified by the URL, in order to display the page specified by the URL, the CPU 610 performs packet communication, sending a page requesting message (containing the URL as a parameter) requesting the file for displaying the page, and receiving a page sending message sent as a response to the page requesting message.

Further, when the user of the mobile telephone device 600 performs, in the Operation unit 604, an operation to download an application program provided by the WWW server connected to the Internet 200, the CPU 610 performs packet communication, sending an application requesting message (containing as a parameter the URL for downloading the application program) requesting download of the application program, and receiving an application sending message containing the application program sent in response to the application requesting message.

When the application requesting message is received, the CPU 610 stores the application program file contained the message in the storage device 604. In addition, the CPU 610 associates and stores in the storage device 607 data indicating the file name of the application program and data indicating the use status of the application program, contained in the application sending message.

The control program executed by the CPU 610 is provided with functionality for sending to the AP managing server 500 information relating to the application program downloaded using the mobile telephone device 600 or the WWW browser.

While executing the control program, the CPU 610 manages the use status of the downloaded application program, and keeps the time elapsed since the application program was last used, based on the data indicating the current time provided from the Timekeeping unit 606. While executing the control program, the CPU 610 sends to the AP managing server 500 the data indicating the file name of the application program and the data indicating the time elapsed since the application program was last used, which is one type of information relating to the application program, based on the timing identifiers and the timing data table stored in the storage device 607.

Further, while executing the control program, when a timing identifier is received which is sent from the AP managing server 500, the CPU 610 stores the received identifier in the storage device 607. When the CPU 610 stores the timing identifier in the storage device 607, it searches through the timing data table using as a key the stored identifier and sends information relating to the mobile telephone device 600 or the application program to the AP managing server 500 in accordance with the corresponding timing.

Further, while executing the control program, when the CPU 610 executes and terminates the application program downloaded form the content server 100 by the user operation, it stores data indicating the data of termination in the storage device 607. While executing the control program, the CPU 610 terminates execution of the application program and associates and stores in the storage device 607 the data indicating the time provided from the Timekeeping unit 606 and the data indicating the file name of the application program which was being executed.

### 1-2. Operation of the Embodiment

Below follows a description of an example of operation of the present embodiment. In the operation example described below, the AP managing server 500 is assumed to be powered up.

Further, the content server 100 is assumed to be powered up and in a state capable of communicating with a client apparatus.

### 1-2-1. Downloading an Application File

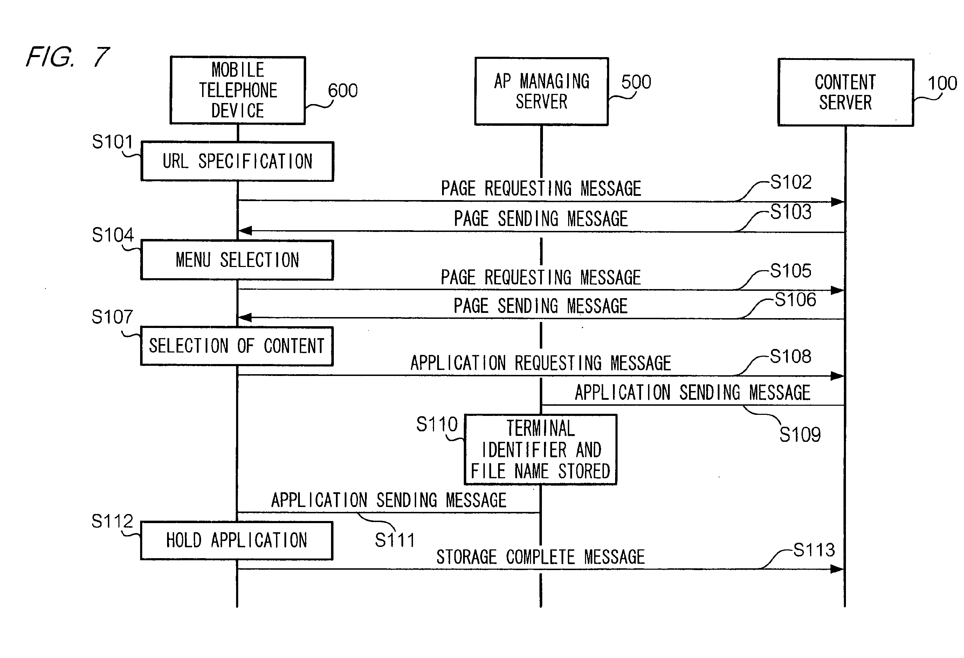

Fig. 7 is a sequence diagram illustrating an operation of the mobile telephone device 600 downloading an application program from the content server 100. Below follows a description of the operation example of the mobile telephone device 600 downloading an application program, with reference to this drawing.

Note that the CPU 610 of the mobile telephone device 600, after being powered up and executing the initialization program, is assumed to have read the control program and the WWW browser program from the ROM 608 and executed them. Further, the Display 605 of the mobile telephone device 600 is assumed to be displaying a WWW browser screen M1 shown in Fig. 2.

First, when the user of the mobile telephone device 600 performs an operation to enter "http://www.abc.co.jp/index.html," which is the URL of the page provided by the content server 100, in a text box for specifying a URL in the WWW browser screen using the Operation unit 604, and a WWW browser screen M2 shown in Fig. 2 is displayed to the Display 605 of the mobile telephone device 600.

Next, the user of the mobile telephone device 600 performs an operation of clicking a "display" button in the WWW browser screen M2 using the Operation unit 604 in order to display the page specified by the entered URL to the Display 605 of the mobile telephone device 600, and the mobile telephone device 600 generates a page requesting message requesting "index.html" for displaying the page. This page requesting message contains as parameters the terminal identifier "0*0-****-????" for identifying the mobile telephone device 600 and "http://www.abc.co.jp/index.html," which is the URL entered in the text box, and has the content server 100, whose server name is "www.abc.co.jp", as the destination address of the message (step S101).

The page requesting message generated by the mobile telephone device 600 is sent to a wireless base station located in the mobile packet communication network 300 from the mobile telephone device 600. The page requesting message received by the wireless base station is sent to the content server 100 via the switchboards and the gateway switchboards in the mobile packet communication network 300 and the gateway server 400, and the Internet 200 (step S102).

When the content server 100 receives the page requesting message, it reads from the storage device 101 "index.html" which is specified by "http://www.abc.co.jp/index.html," which is the URL contained in the page requesting message as a parameter.

Next, the content server 100 generates a page sending message containing "index.html" read from the storage device 101. This page sending message has as the destination address of the message the mobile telephone device 600 specified by the terminal identifier "0*0-****-????" contained in the page requesting message. The content server 100 sends the generated page sending message to the Internet 200. The page sending message sent to the Internet 200 is sent to the mobile telephone device 600 via the mobile packet communication network 300 (step S103).

The mobile telephone device 600 which received the page sending message reads the "index.html" contained in the page sending message. The content of the read "index.html" is interpreted by the WWW browser which is being executed in the mobile telephone device 600 and the WWW browser screen M3 shown in Fig. 2 is displayed to the Display 605.

Next, the user of the mobile telephone device 600 operates the Operation unit 604 to perform an operation for clicking on the "download application" portion underlined in the WWW browser screen M3, and the mobile telephone device 600 extracts the URL "http://www.abc.co.jp/download.html" written and associated with "application download" from "index.html".

After the URL is extracted, the mobile telephone device 600 generates a page requesting message requesting "download.html" which is displayed in the extracted URL. This page requesting message contains as parameters the terminal identifier "0*0-****-????" for identifying the mobile telephone device 600 and "http://www.abc.co.jp/download.html," which is the extracted URL, and has the content server 100, whose server name is "www.abc.co.jp", as the destination address of the message (step S104). The page requesting message generated by the mobile telephone device 600 is sent to the content server 100 from the mobile telephone device 600 (step S105).

When the content server 100 receives the page requesting message sent from the mobile telephone device 600, it reads from the storage device 101 "download.html" which is specified by "http://www.abc.co.jp/download.html," which is the URL contained in the page requesting message as a parameter.

Next, the content server 100 generates a page sending message containing "download.html" read from the storage device 101. This page sending message has, as the destination address of the message, the mobile telephone device 600 specified by the terminal identifier "0*0-****-????" contained in the page requesting message. After generating the page requesting message, the content server 100 sends the generated page requesting message to the mobile telephone device 600 (step S106).

When the mobile telephone device 600 receives the page sending message, it reads "download.html" contained in the page sending message. The content of the read "download.html" is interpreted by the WWW browser which is being executed in the mobile telephone device 600 and the WWW browser screen M4 shown in Fig. 2 is displayed to the Display 605.

The user of the mobile telephone device 600 operates the Operation unit 604 to perform an operation for clicking on a "yes" button portion in order to download an application program, and the mobile telephone device 600 extracts the URL "http://www.abc.co.jp/ticket.exe" written in "download.html."

After the URL is extracted, the mobile telephone device 600 generates an application requesting message requesting acquisition of "ticket.exe" which is displayed in the extracted URL (step S107). This application requesting message contains as parameters the terminal identifier "0*0-****-????" for identifying the mobile telephone device 600 and "http://www.abc.co.jp/ticket.exe," which is the extracted URL, and has the content server 100, whose server name is "www.abc.co.jp.", as the destination address of the message. The application requesting message generated by the mobile telephone device 600 is sent to the content server 100 from the mobile telephone device 600 (step S108).

When the content server 100 receives the application requesting message, it reads from the storage device 101 "ticket.exe" which is specified by "http://www.abc.co.jp/ticket.exe," which is the URL contained in the application requesting message as a parameter. Next, the content server 100 generates an application sending message containing the server name "www.abc.co.jp" of the content server 100, the terminal identifier "0*0-****-????" contained in the application requesting message, "ticket.exe" read from the storage device 101, and the file name "ticket.exe" of "ticket.exe."

The generated application sending message is sent from the content server 100 and sent to the AP managing server 500 via the Internet 200 and the gateway server 400 (step S109). After sending the application sending message, the content server 100 associates the terminal identifier "0*0-****-????" and the file name "ticket.exe" of the sent file, and stores these in the storage device 101 as distribution destination data in the format F11 shown in Fig. 3.

When the AP managing server 500 receives the application sending message, it extracts "www.abc.co.jp," which is the server name of the content server 100, "ticket.exe," which is the file name of the application program, and the terminal identifier "0*0-****-????" for identifying the mobile telephone device, which are contained in the received application sending message. The AP managing server 500 associates the extracted server name of the content server 100, the file name of the application program, and the terminal identifier and stores them in the storage device 501 as status data in the format F21 shown in Fig. 4 (step S110).

Next, the AP managing server 500 references the terminal identifier contained in the application sending message and sends the application sending message with the mobile telephone device 600 whose terminal identifier is "0*0-****-????" as the destination address. The application sending message sent from the AP managing server 500 is sent to the mobile telephone device 600 via the gateway server 400 and the gateway switchboards, switchboards, and wireless base station in the mobile packet communication network 300 (step S111).

When the mobile telephone device 600 receives the application sending message, it displays a screen indicating that download of the application program is complete to the Display 605, extracts the application program "ticket.exe" contained in the received application sending message, and stores the extracted application program in the storage device 607 in the format F31 shown in Fig. 6 (step S112).

When the mobile telephone device 600 stores the application program in the storage device 607, it generates a storage complete message notifying that the application program has been stored, and sends the generated message to the content server 100 (step S113). The content server 100 receives the storage complete message sent from the mobile telephone device 600.

### 1-2-2. Sending the Status of the Mobile Telephone Device during Position Registration

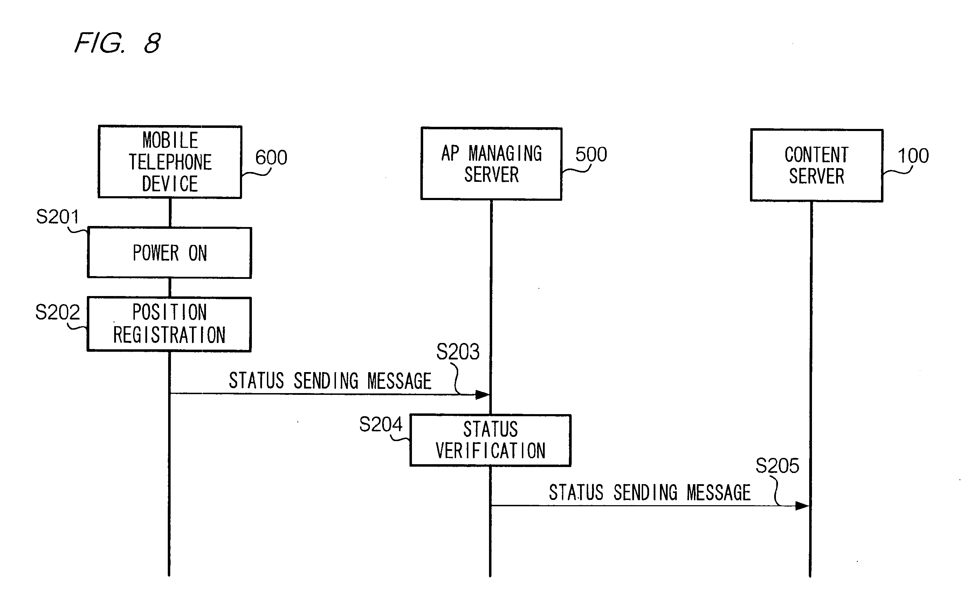

Next, an operation for sending to the AP managing server 500 information relating to the application programs downloaded to the mobile telephone device at an opportunity in which the mobile telephone device 600 performs position registration is described, using Fig. 8.

In the operation described below, it is assumed that an operation for downloading the above-mentioned application program "ticket.exe" has been performed in the mobile telephone device 600, and that the downloaded "ticket.exe" has not been used in 48 hours since it was last used. Further, it is assumed that the power of the mobile telephone device 600 has been turned off before beginning the operation.

Further, it is assumed that the timing identifier ID002 indicating the timing for sending information relating to the mobile telephone device and application programs has been written to the storage device 607 of the mobile telephone device 600 when the mobile telephone device 600 was shipped.

First, the user of the mobile telephone device 600 turns on the power of the mobile telephone device 600 and, after an initialization process is performed, the control program is executed in the mobile telephone device 600 (step S201).

When the mobile telephone device 600 executes the control program, reception is performed of information indicating the position registration area for performing position registration, which is regularly sent wirelessly from a wireless base station in the mobile packet communication network 300, in order for the mobile telephone device 600 to receive the mobile data communication service provided by the mobile packet communication network 300. When the mobile telephone device 600 receives the information indicating the position registration area for performing position registration, a position registration process is performed between the mobile telephone device 600 and the mobile packet communication network 300 in order to register the position of the mobile telephone device 600 in the mobile packet communication network 300 (step S202).

The mobile telephone device 600 references a timing data table F32 stored in the storage device 607, using as a key the timing identifier ID002 stored in the storage device 607.

The timing identifier ID002 indicates "sending information relating to application programs when performing position registration," so that after performing the position registration process, the mobile telephone device 600 generates a status sending message containing the terminal identifier "0*0-****-????", the file name "ticket.exe" of the application program downloaded to the mobile telephone device 600, and the data "48 hours" indicating the time elapsed since "ticket.exe" was last used, and sends the generated status sending message to the AP managing server 500, at an opportunity in which the position registration process has been performed (step S203).

When the status sending message is received, the AP managing server 500 searches through the status data stored in the storage device 501 using as a key the terminal identifier "0*0-****-????" and the file name "ticket.exe" of the application program, contained in the received message, associates the corresponding status data and stores the data "48 hours" indicating the time elapsed since "ticket.exe" was last used, contained in the received message.

Next, using as a key the tile name "ticket.exe" contained in the status sending message, the AP managing server 500 searches for data on the period during which application programs can be stored in the mobile telephone device without being used, which is stored in the format F2 shown in Fig. 4 in the storage device 501, and reads the data "72 hours" indicating the period during which "ticket.exe" can be stored in the mobile telephone device without being used.

Next, the AP managing server 500 compares the data "72 hours" indicating the period during which "ticket.exe" can be stored in the mobile telephone device without being used with the data "48 hours" indicating the time elapsed since "ticket.exe" was last used in the mobile telephone device 600, and judges whether or not to stop use of "ticket.exe" stored in the mobile telephone device 600. Because "48 hours," which is the time elapsed since "ticket.exe" was downloaded to the mobile telephone device 600 and used last, is less than "72 hours," which is the period during which "ticket.exe" can be stored in the mobile telephone device without being used, "ticket.exe" which has been downloaded to the mobile telephone device 600, is judged as being able to continue being used (step S204).

After judging whether or not to stop use of the application program, the AP managing server 500 adds data "okay to use" indicating the use status of "ticket.exe" to the status sending message sent from the mobile telephone device 600. Next, the AP managing server 500 searches through the status data stored in the storage device 501 using as a key the terminal identifier "0*0-****-????" and the file name "ticket.exe" of the application program, contained in the status sending message, and reads from the storage device 501 the server name "www.abc.co.jp" of the server which originally provided "ticket.exe." The AP managing server 500 sends the status sending message with the content server 100 specified by the read server name "www.abc.co.jp" as the destination address (step S205).

When the status sending message is received by the content server 100, it searches through the distribution destination data stored in the storage device 101 using as a key the terminal identifier "0*0-****-????" and the file name "ticket.exe" of the application program, contained in the status sending message, and stores the data indicating the use status of the application program of the corresponding data as "okay to use."

### 1-2-3. Sending the Status of the Mobile Telephone Device upon Instruction from the Managing Server

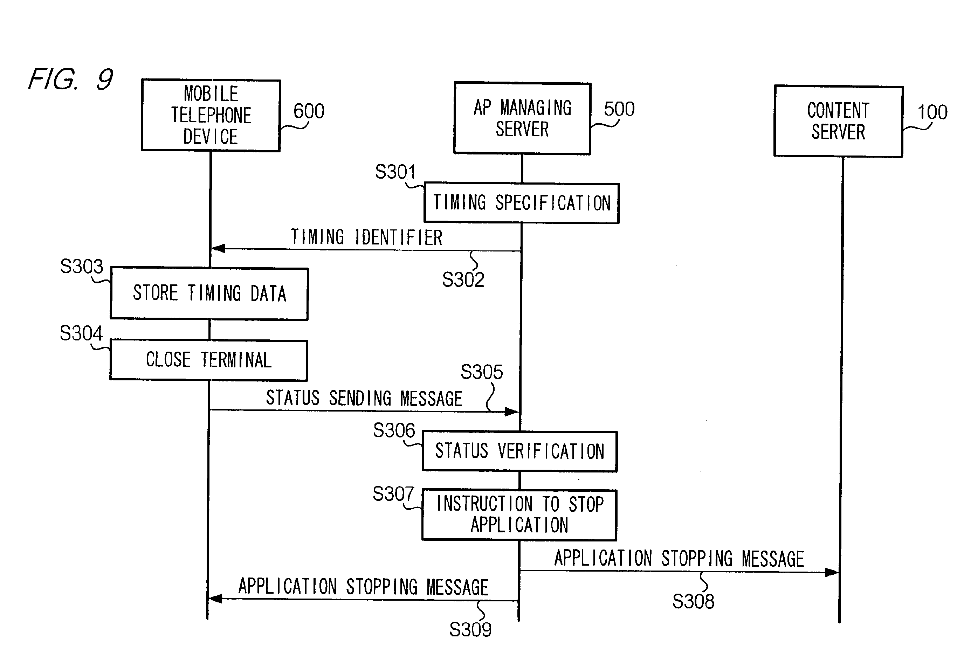

Next an operation in which the mobile telephone device 600 sends information relating to downloaded application programs to the AP managing server 500 upon instruction from the AP managing server 500 is described, with reference to Fig. 9.

In the operation described below, the mobile telephone device 600 is assumed to be powered up.

Further, it is assumed that the time elapsed since the application program "ticket.exe" downloaded to the mobile telephone device 600 was last used is "75 hours."

Further, it is assumed that the foldable mobile telephone device 600 is open before beginning the operation.

Upon an instruction from the AP managing server 500, the operation in which the mobile telephone device 600 sends information relating to the application program to the AP managing server 500 begins first of all from an operation in which the user of the AP managing server 500 specifies a timing identifier.

When the user of the AP managing server 500 performs an operation on the AP managing server 500 and selects, as a timing for sending information relating to the mobile telephone device or the application program, "sending when a foldable terminal is closed" from the timing data table stored in the storage device 501 (step S301), the timing identifier ID001 identifying this timing is sent to the mobile telephone device 600 (step S302).

When the timing identifier is received by the mobile telephone device 600, the received timing identifier ID001 is stored in the storage device 607.

The mobile telephone device 600 searches through the timing data table stored in the storage device 607 using ID001 as a key. Since, as a result of the search through the timing data table, the sent timing identifier ID001 has content indicating "sending when a foldable terminal is closed," the mobile telephone device 600 is set to send to the AP managing server 500 information relating to the mobile telephone device 600 or application programs when the mobile telephone device 600 is closed from an open state (step S303).

When the user of the mobile telephone device 600 closes the mobile telephone device 600, a status sending message is generated containing the terminal identifier "0*0-****-????," the file name "ticket.exe" of the application program downloaded to the mobile telephone device 600, and "75 hours," which is data indicating the time elapsed since "ticket.exe" was last used. The generated status sending message is sent to the AP managing server 500.

When the status sending message is received, the AP managing server 500 searches through the status data stored in the storage device 501 using as a key the terminal identifier "0*0-****-????" and the file name "ticket.exe" of the application program, contained in the received message, associates the corresponding status data with the data "75 hours" indicating the time elapsed since "ticket.exe" was last used, contained in the received message, and stores them.

Next, the AP managing server 500 uses as a key the file name "ticket.exe" contained in the status sending message to search for data indicating the period during which application programs can be stored in the mobile telephone device 600 without being used, and reads, from the storage device 501, the data "72 hours" indicating the period during which "ticket.exe" can be stored in the mobile telephone device 600 without being used.

Next, the AP managing server 500 compares the data "72 hours" indicating the period during which the application program "ticket.exe" can be stored in the mobile telephone device 600 without being used with the data "75 hours" indicating the time elapsed since the application program "ticket.exe" was last used in the mobile telephone device, and judges whether or not to stop use of "ticket.exe" stored in the mobile telephone device 600. Since "75 hours," the time elapsed since the application program "ticket.exe" was downloaded to the mobile telephone device 600 and last used, is longer than the period during which the application program can be stored in the mobile telephone device 600 without being used, a judgment is made to stop use of "ticket.exe" which was downloaded to the mobile telephone device 600.

Next, the AP managing server 500 searches through status data stored in the storage device 501 using as a key the terminal identifier "0*0-****-????" and the file name "ticket.exe" of the application program, contained in the status sending message, and changes the data indicating the use status of the application program registered in association with the corresponding terminal identifier to "stop use."

Next, the AP managing server 500 generates an application stop message for stopping use of the application program "ticket.exe" stored in the mobile telephone device 600. The application stopping message contains the file name "ticket.exe" of the application program and the terminal identifier "0*0-****-????" of the mobile telephone device 600 in which use of the application program is to be stopped.

Next, the AP managing server 500 searches through the status data stored in the storage device 501 using as a key the terminal identifier "0*0-****-????" and the file name "ticket.exe" of the application program, contained in the status sending message, and reads from the storage device 501 the server name "www.abc.co.jp" of the server which originally provided "ticket.exe." The AP managing server 500 sends the generated application stopping message with the content server 100 specified by the read server name "www.abc.co.jp" as the destination address (step S308).

Further, the AP managing server 500 sends the generated application stopping message to the mobile telephone device 600 specified by the terminal identifier "0*0-****-????" contained in the status sending message (step S309).

The content server 100, which received the application stopping message, searches through distribution destination data stored in the storage device 101 using as a key the terminal identifier "0*0-****-????" and the file name "ticket.exe" of the application program, contained in the application stopping message, and changes the data indicating the use status of the application program designated by the corresponding terminal identifier to "stop use."

When the mobile telephone device 600 receives the application stopping message, it puts the application program designated by the file name "ticket.exe" of the application program contained in the application stopping message to a stop-use state. The application program will thereby not be executed even if the user performs an operation in the Operation unit 604 for instructing execution of the application program.

As described above, with the present embodiment, setting the timing for sending information relating to application programs to the mobile telephone device 600 via a network enables changing the timing in which the mobile telephone device 600 sends information relating to application programs.

Further, with the present embodiment, companies providing application programs can know the status of application programs downloaded to the mobile telephone device 600.

### 2. Modifications

In the present embodiment, the mobile telephone device 600 is set so as to send information relating to application programs when it performs position registration and when the mobile telephone device 600 is closed if it is a foldable type, but other timings are possible, and are not limited to the timing of the present embodiment.

Further, in the present embodiment, the AP managing server 500 is set so as to stop use of application programs downloaded to the mobile telephone device 600 based on data sent from the mobile telephone device 600, but it is also possible to delete the applications.

In the present embodiment, when stopping application programs downloaded to the mobile telephone device 600, the user of the mobile telephone device 600 is not notified of this, but it is also possible for the AP managing server 500 to notify the user that use of an application program is being stopped by sending an electronic mail message to the mobile telephone device 600 to the effect that use of an application program is being stopped, when stopping use of an application program.

In the present embodiment, the judgment to stop use of an application program is performed by the AP managing server 500, but it is also possible for the content server 100 to perform the judgment of stopping use of the application program after information relating to application programs is sent to the content server 100, with the content server sending an instruction to the mobile telephone device 600 to stop use of the application program.

In the present embodiment, the identifier indicating the timing of sending information relating to application programs from the mobile telephone device 600 to the AP managing server 500 is sent to the mobile telephone device 600 at a time other than when an application program is being downloaded, but it is also possible to send the identifier indicating the timing of sending information relating to application programs to the mobile telephone device 600 at the same time as an application program is downloaded.

In the present embodiment, only one timing is specified when specifying a timing for sending information relating to application programs, but it is also possible to specify and send a plurality of timings to the mobile telephone device 600.

In the present embodiment, the specification of a timing for sending information relating to application programs is performed by the AP managing server 500, but it is also possible for the content server 100 to perform the specification of a timing for sending, and send the information to the AP managing server 500 and then to the mobile telephone device 600.

In the present embodiment, information relating to application programs is sent to the AP managing server 500 and the content server 100, but it is also possible to send data relating to the status of the mobile telephone device 100 to the AP managing server 500 or the content server 100, in addition to information relating to application programs. Further, it is also possible for the AP managing server 500 or content server 100, which have received data relating to the status of the mobile telephone device 100, to store the received data in their respective storage devices.

In the present embodiment, the data indicating the time elapsed since an application program was last used, contained in the status sending message, is not stored in the content server 100, but it is also possible to store this time in the storage device 101 as data indicating information relating to the application program after receiving the status sending message.

In the present embodiment, the data indicating the time elapsed since an application program was last used is not contained in the application stopping message, but it is also possible to include this data in the application stopping message. Further, it is also possible for the content server 100, which ha s received the application stopping message, to store the data indicating the time elapsed since the application program was last used in the storage device 101, when including the data indicating the time elapsed since the application program was last used in the application stopping message.

## Claims

1. A terminal managing method comprising:
an opportunity data set sending step of sending, from a managing server apparatus having a storage device, an opportunity data set indicating an opportunity to send data to a mobile communication terminal having a storage device via a communication network;
an opportunity data set receiving step of receiving, at the mobile communication terminal, the opportunity data set sent in the opportunity data set sending step;
an information data set sending step of sending, from the mobile communication terminal, an information data set indicating information relating to the mobile communication terminal to the managing server apparatus via the communication network at the opportunity indicated by the opportunity data set; and
an information data set storing step of receiving, at the managing server apparatus, the information data set sent in the information data set sending step and storing the received information data set in the storage device.

2. The terminal managing method according to claim 1, wherein
the managing server stores a plurality of opportunity data sets, each data set specifying differing opportunities, and sends one of the plurality of opportunity data sets to the mobile communication terminal.

3. The terminal managing method according to claim 1, wherein
the opportunity indicated by the opportunity data set specifies a prescribed operation of the mobile communication terminal.

4. The terminal managing method according to claim 3, wherein
the opportunity indicated by the opportunity data set is a time when the mobile communication terminal performs position registration.

5. The terminal managing method according to claim 3, wherein
the mobile communication terminal is a foldable terminal, and
the opportunity indicated by the opportunity data set is a time when the mobile communication terminal is closed.

6. The terminal managing method according to claim 3, wherein
the opportunity indicated by the opportunity data set is a time when a WWW browser is terminated in the mobile communication terminal.

7. The terminal managing method according to claim 1, further comprising:
a program request sending step of sending, from the mobile communication terminal, a program request requesting a program usable by the mobile communication terminal to a program providing server apparatus which provides programs via the communication network;
a program sending step of receiving, at the program providing server apparatus, the program request sent in the program request sending step and sending a program usable by the mobile communication terminal in response to the received program request, with the mobile communication terminal as a destination; and
a program receiving step of receiving, at the mobile communication terminal, the program sent in the program sending step; and wherein,
in the information data set sending step the mobile communication terminal sends data indicating information relating to the program as the information data to the managing server apparatus via the communication network.

8. The terminal managing method according to claim 7, further comprising:
an information data set transferring step of sending, from the managing server apparatus, the information data set received in the information data set storing step to the program providing server apparatus; and
an information data set receiving step of receiving, at the program providing server apparatus, the information data set sent in the information data set transferring step.

9. The terminal managing method according to claim 7, further comprising:
a program stop request sending step of the managing server apparatus receiving the information data set indicating information relating to the program sent in the information data set sending step, reading data indicating conditions for stopping use of the program from the storage device, comparing the read data with information data set set indicating information relating to the program, generating and sending, to the mobile communication terminal, a program stop request to request stopping use of the program; and
a program execution prohibiting step of the mobile communication terminal receiving the program stop request sent in the program stop request sending step, making use of the program by the user of the mobile communication terminal impossible.

10. A terminal managing apparatus comprising:
opportunity data set sending means for sending an opportunity data set indicating an opportunity for sending data to a mobile communication terminal having a storage device via a communication network; and
information data storing means for receiving an information data set indicating information relating to the mobile communication terminal sent from the mobile communication terminal via the communication network and storing the received information data set in the storage device.

11. A mobile communication terminal comprising:
opportunity data receiving means for receiving an opportunity data set sent via a communication network from a server apparatus sending opportunity data indicating an opportunity to send data; and
information data set sending means for sending an information data set indicating information relating to the terminal to the server apparatus via the communication network at the opportunity indicated by the opportunity data set received by the opportunity data receiving means.
